# EUROPEAN PATENT APPLICATION

(11) **EP 4 203 153 A1**
(43) Date of publication of application: **28.06.2023**
(21) Application number: 21955327.8
(22) Date of filing: 30.08.2021
(51) Int. Cl.: H01M 50/209, H01M 50/244, H01M 50/249, H01M 50/258, H01M 10/613, H01M 10/625, H01M 10/65

(54) **BATTERY BOX, BATTERY, ELECTRICAL DEVICE, AND METHOD AND APPARATUS FOR PREPARING BATTERY**

(71) Applicant: Contemporary Amperex Technology Co., Limited, Fujian PRC 352100 (CN)
(72) Inventor: HU, Lu, Ningde, Fujian 352100 (CN); CHEN, Xiaobo, Ningde, Fujian 352100 (CN); LI, Yao, Ningde, Fujian 352100 (CN); YANG, Piaopiao, Ningde, Fujian 352100 (CN); GU, Mingguang, Ningde, Fujian 352100 (CN); WU, Shaoji, Ningde, Fujian 352100 (CN)
(74) Representative: Gong, Jinping
(86) International application number: PCT/CN2021/115295
(87) International publication number: WO 2023/028745

(57) **Abstract**

Embodiments of the present application provide a battery housing, a battery, an electrical apparatus, and a method and a device for manufacturing a battery. The housing comprises: an electrical cavity configured to accommodate a plurality of battery cells, wherein at least one battery cell of the plurality of battery cells comprises a pressure relief mechanism; a collection cavity configured to collect emissions from the battery cell provided with the pressure relief mechanism when the pressure relief mechanism is actuated; a separation component configured to separate the electrical cavity and the collection cavity, so that the electrical cavity and the collection cavity are provided on either side of the separation component; a partition structure configured to partition the collection cavity into a first cavity and a second cavity, wherein the partition structure is provided with a first exhaust vent, and the first exhaust vent is configured to guide the emissions in the first cavity into the second cavity; and a flow channel baffle arranged in the second cavity and configured to form a flow channel for guiding the emissions. The technical solutions of the embodiments of the present application can enhance the safety of the battery.

## Description

### Technical Field

The present application relates to the field of battery technology, and particularly, to a battery housing, a battery, an electrical apparatus, a method for manufacturing a battery, and a device for manufacturing a battery.

### Background Art

Energy saving and emission reduction is the key to sustainable development of the automobile industry. In this case, electric vehicles have become an important part of the sustainable development of the automobile industry because of their advantages of energy saving and environmental protection. For electric vehicles, battery technology is an important factor related to their development.

In the development of the battery technology, safety is also a non-negligible issue in addition to improvement of performance of the batteries. If the safety of a battery cannot be guaranteed, the battery cannot be used. Therefore, how to enhance the safety of the batteries is an urgent technical problem to be solved in the battery technology.

### Summary of the Invention

The present application provides a battery housing, a battery, an electrical apparatus, a method for manufacturing a battery, and a device for manufacturing a battery, which can improve the safety of the battery.

In a first aspect, provided is a battery housing, which comprises: an electrical cavity configured to accommodate a plurality of battery cells, wherein at least one battery cell of the plurality of battery cells comprises a pressure relief mechanism configured to be actuated when the internal pressure or temperature of the battery cell provided with the pressure relief mechanism reaches a threshold so as to relieve the internal pressure; a collection cavity configured to collect emissions from the battery cell provided with the pressure relief mechanism when the pressure relief mechanism is actuated; a separation component configured to separate the electrical cavity and the collection cavity, so that the electrical cavity and the collection cavity are provided on either side of the separation component; a partition structure configured to partition the collection cavity into a first cavity and a second cavity, wherein the partition structure is provided with a first exhaust vent, and the first exhaust vent is configured to guide the emissions in the first cavity into the second cavity; and a flow channel baffle arranged in the second cavity and configured to form a flow channel for guiding the emissions.

In an embodiment of the present application, the electrical cavity configured to accommodate the battery cells is separated from the collection cavity configured to collect emissions by means of the separation component, and when the pressure relief mechanism is actuated, the emissions of the battery cells enter the collection cavity, and no or minimal emissions enter the electrical cavity, so that the electrically connected components in the electrical cavity will not be turned on and short-circuited, thereby enhancing the safety of the battery. Also, in the present application, the collection cavity is further partitioned into two cavities by the partition structure, and a flow channel for guiding the emissions is formed in the second cavity by using a flow channel baffle, so as to extend the discharge path of the emissions, which can further cool the emissions, reduce the possibility of combustion of the emissions, reduce the impact of the emissions on the external environment, and enhance the safety of the battery.

In some embodiments, the housing further comprises: a pressure balancing mechanism configured to balance the pressure inside and outside the housing, wherein the pressure balancing mechanism is configured such that the emissions are guided to the pressure balancing mechanism through the flow channel and discharged to the outside of the housing.

The pressure balancing mechanism is provided to discharge the emissions of the battery cells to the outside of the housing, so that the pressure inside and outside the housing can be kept balanced to ensure the safety of the battery.

In some embodiments, the first exhaust vent is provided at an end of the partition structure away from the pressure balancing mechanism, or the first exhaust vent is provided in the middle of the partition structure.

The first exhaust vent can be arranged at different positions of the partition structure to match the structural strength of the battery, so that the structural design of the battery housing is more flexible.

In some embodiments, the flow channel is an S-shaped flow channel, and an inlet of the flow channel is communicated with the first exhaust vent.

In the embodiments of the present application, the circuitous S-shaped flow channel is provided to maximize the length of the flow channel, so that the discharge path of the emissions can be extended to enable sufficient flow buffering of the emissions, thereby lowering the temperature of the emissions and reducing the possibility of combustion of the emissions. Also, the inlet of the S-shaped flow channel can be communicated with the first exhaust vent, so that the discharge path of the emissions from the first cavity into the second cavity can be greatly extended. As a result, the temperature of the emissions can be lowered as much as possible, the possibility of combustion of the emissions can be reduced, and the safety of the battery can be ensured.

In some embodiments, an oxidant or a cooling material is provided in the collection cavity.

The emissions generated after the thermal runaway of the battery cell may comprise combustible gases, such as H₂, and CO. In the embodiments of the present application, a material that can react with the combustible gases in the emissions may also be provided in the housing, which can further reduce the possibility of combustion of the emissions, make the emissions less likely to be ignited, enhance the safety of the battery, and ensure the safety of the battery and the external environment.

In some embodiments, the oxidant or the cooling material is provided on the surface of the partition structure; and/or, the oxidant or the cooling material is provided on the surface of the flow channel baffle.

By providing at least one of the above-mentioned oxidant or cooling material on the discharge path of the emissions, the emissions can be further treated, the possibility of combustion of the emissions is reduced, and the safety of the battery and the external environment is ensured.

In some embodiments, the housing further comprises: a guard member configured to protect the separation component, wherein the guard member and the separation component form the collection cavity, and wherein the oxidant or the cooling material is provided on a surface of the guard member facing the separation component.

By arranging the oxidant or the cooling material on the surface of the guard member, the emissions can further react or be treated on the discharge path, thereby further lowering the temperature of the emissions and reducing their possibility of combustion, and ensuring the safety of the battery and the external environment.

In some embodiments, a surface of the partition structure facing the guard member has a recessed portion, and the recessed portion is configured to accommodate the oxidant or the cooling material.

In the embodiments of the present application, by arranging the recessed portion with an uneven surface structure, the contact area between the cavity and the emissions can be significantly increased, and at the same time, more oxidants or cooling materials can be held, so that the emissions can react more thoroughly and effectively on the discharge path, which can lower the temperature and possibility of combustion of the emissions, reduce their impact on the battery and the external environment, and ensure the safety of the battery.

In some embodiments, the electrical cavity comprises a first sub-cavity and a second sub-cavity, the first sub-cavity is configured to accommodate the plurality of battery cells, and the second sub-cavity is provided adjacent to the first sub-cavity; the pressure balancing mechanism is provided on the outer wall of the second sub-cavity, and the second sub-cavity is configured to be communicated with the second cavity to allow the emissions to be guided into the second sub-cavity through the flow channel, and discharged to the outside of the housing through the pressure balancing mechanism.

In the embodiments of the present application, the emissions generated by the battery cells in the first sub-cavity can enter the second sub-cavity through the second cavity and be discharged through the pressure balancing mechanism on the second sub-cavity. On one hand, the cavity for collecting the emissions is separated from the first sub-cavity for accommodating the battery cells, which can avoid the impact of the emissions on the electrically connected components in the first sub-cavity, and enhance the safety of the battery. On the other hand, by providing the second cavity and the second sub-cavity, the discharge path of the emissions can be greatly extended, so that the emissions can be further cooled, the possibility of combustion of the emissions is reduced, and the safety of the battery and the external environment is enhanced.

In some embodiments, the separation component is provided with a second exhaust vent, the partition structure is further provided with a third exhaust vent corresponding to the second exhaust vent, and the second sub-cavity is communicated with the second cavity via the second exhaust vent and the third exhaust vent.

In a second aspect, provided is a battery, which comprises: a plurality of battery cells, wherein at least one battery cell of the plurality of battery cells comprises a pressure relief mechanism, and the pressure relief mechanism is configured to be actuated when the internal pressure or temperature of the battery cells reaches a threshold so as to relieve the internal pressure; and the housing according to the first aspect, and the plurality of battery cells are accommodated in the housing.

In a third aspect, provided is an electrical apparatus, which comprises the battery according to the second aspect, the battery being configured to provide electric energy.

In some embodiments, the electrical apparatus is a vehicle, a ship or a spacecraft.

In a fourth aspect, provided is a method for manufacturing a battery, which comprises: providing a plurality of battery cells, wherein at least one battery cell of the plurality of battery cells comprises a pressure relief mechanism configured to be actuated when the internal pressure or temperature of the battery cell provided with the pressure relief mechanism reaches a threshold so as to relieve the internal pressure; providing a housing which comprises: an electrical cavity configured to accommodate the plurality of battery cells; a collection cavity configured to collect emissions from the battery cell provided with the pressure relief mechanism when the pressure relief mechanism is actuated; a separation component configured to separate the electrical cavity and the collection cavity, so that the electrical cavity and the collection cavity are provided on either side of the separation component; a partition structure configured to partition the collection cavity into a first cavity and a second cavity, wherein the partition structure is provided with a first exhaust vent, and the first exhaust vent is configured to guide the emissions in the first cavity into the second cavity; and a flow channel baffle provided in the second cavity and configured to form a flow channel for guiding the emissions.

In a fifth aspect, provided is a device for manufacturing a battery, which comprises: a first provision module configured to provide a plurality of battery cells, wherein at least one battery cell of the plurality of battery cells comprises a pressure relief mechanism configured to be actuated when the internal pressure or temperature of the battery cell provided with the pressure relief mechanism reaches a threshold so as to relieve the internal pressure; a second provision module configured to provide a housing which comprises: an electrical cavity configured to accommodate the plurality of battery cells; a collection cavity configured to collect emissions from the battery cell provided with the pressure relief mechanism when the pressure relief mechanism is actuated; a separation component configured to separate the electrical cavity and the collection cavity, so that the electrical cavity and the collection cavity are provided on either side of the separation component; a partition structure configured to partition the collection cavity into a first cavity and a second cavity; and a flow channel baffle provided in the second cavity and configured to form a flow channel for guiding the emissions; and an arrangement module configured to arrange a first exhaust vent on the partition structure, wherein the first exhaust vent is configured to guide the emissions in the first cavity into the second cavity.

### Description of Drawings

In order to illustrate the technical solutions of the embodiments of the present application more clearly, the drawings required in the embodiments of the present application will be briefly introduced below. Obviously, the drawings described below are only some embodiments of the present application. For those of ordinary skill in the art, other drawings can also be obtained according to the drawings without any creative effort.
Fig. 1 is a schematic structural diagram of a vehicle disclosed in an embodiment of the present application;
Fig. 2 is a schematic structural diagram of a battery disclosed in an embodiment of the present application;
Fig. 3 is a schematic local structural diagram of a battery cell group disclosed in an embodiment of the present application;
Fig. 4 is an exploded view of a battery cell disclosed in an embodiment of the present application;
Fig. 5 is an exploded view of a battery cell disclosed in another embodiment of the present application;
Fig. 6 is a schematic structural diagram of a battery disclosed in an embodiment of the present application;
Fig. 7 is a schematic structural diagram of a housing disclosed in an embodiment of the present application;
Fig. 8 is an exploded view corresponding to the housing in Fig. 7;
Fig. 9 is a schematic plan view corresponding to the housing in Figs. 7 and 8;
Figs. 10 to 12 are schematic cross-sectional views corresponding to the housing in Fig. 9 along the axes A-A, B-B, and C-C, respectively;
Fig. 13a is a schematic diagram of an arrangement manner of a first exhaust vent disclosed in an embodiment of the present application;
Fig. 13b is a bottom view corresponding to the arrangement manner of the first exhaust vent in Fig. 13a;
Fig. 13c is a top view corresponding to the arrangement manner of the first exhaust vent in Fig. 13a;
Fig. 14a is a schematic diagram of another arrangement manner of a first exhaust vent disclosed in an embodiment of the present application;
Fig. 14b is a bottom view corresponding to the arrangement manner of the first exhaust vent in Fig. 14a;
Fig. 14c is a top view corresponding to the arrangement manner of the first exhaust vent in Fig. 14a;
Figs. 15a and 15b are schematic diagrams of a structure with a recessed portion disclosed in an embodiment of the present application;
Fig. 16 is an exploded view of a battery disclosed in an embodiment of the present application;
Fig. 17 is a schematic flow chart of a method for manufacturing a battery disclosed in an embodiment of the present application;
Fig. 18 is a schematic block diagram of a device for manufacturing a battery disclosed in an embodiment of the present application.

In the drawings, the drawings are not drawn to actual scale.

### Detailed Description

Implementations of the present application are described in further detail below in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "a plurality of" means two or more (comprising two); the orientational or positional relationships indicated by the terms "upper", "lower", "left", "right", "inner" and "outer" are only for facilitating the description of the present application and simplifying the description, rather than indicating or implying that the device or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Vertical" is not strictly vertical, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the present application, battery cells may comprise a primary battery, a secondary battery, for example, a lithium-ion battery, a lithium-sulfur battery, a sodium-lithium-ion battery, a sodium-ion battery, or a magnesium-ion battery, which is not limited in the embodiments of the present application. The battery cell may be cylindrical, flat, rectangular, or in other shapes, which is also not limited in the embodiments of the present application. The battery cells are generally partitioned into three types according to packaging manners: cylindrical battery cells, rectangular battery cells, and pouch cells, which is not limited in the embodiments of the present application.

The battery mentioned in the embodiments of the present application refers to a single physical module comprising one or more battery cells to provide a higher voltage and capacity. For example, the battery mentioned in the present application may comprise a battery cell group or a battery pack, or the like. The battery pack typically comprises a housing for encapsulating one or more battery cells. The housing can prevent liquids or other foreign matters from affecting charging or discharging of the battery cells.

The battery cell comprises an electrode assembly and an electrolyte solution, and the electrode assembly comprises a positive electrode sheet, a negative electrode sheet, and a separator. The battery cell works mainly relying on the movement of metal ions between the positive electrode sheet and the negative electrode sheet. The positive electrode sheet comprises a positive current collector and a positive electrode active material layer, the positive electrode active material layer is coated on a surface of the positive current collector, the current collector not coated with the positive electrode active material layer protrudes from the current collector coated with the positive electrode active material layer, and the positive electrode active material layer not coated with the current collector is used as a positive tab. Taking a lithium-ion battery as an example, the material of the positive current collector may be aluminum, and the positive electrode active material may be lithium cobalt oxide, lithium iron phosphate, ternary lithium, lithium manganate, or the like. The negative electrode sheet comprises a negative current collector and a negative active material layer, the negative active material layer is coated on a surface of the negative current collector, the current collector not coated with the negative active material layer protrudes from the current collector coated with the negative active material layer, and the current collector not coated with the negative active material layer is used as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The material of the separator may be polypropylene (PP) or polyethylene (PE). In addition, the electrode assembly may be of a wound structure or a laminated structure, which is not limited in the embodiments of the present application. Many design factors, such as energy density, cycle life, discharge capacity, charge-discharge rate and other performance parameters, should be considered in the development of the battery technology. In addition, the safety of the battery also needs to be taken into account.

For batteries, the main safety hazard comes from the charging and discharging process. In order to improve the safety performance of the battery, the battery cell is generally provided with a pressure relief mechanism. The pressure relief mechanism refers to an element or component that is actuated to relieve the internal pressure or temperature when the internal pressure or temperature of the battery cell reaches a preset threshold. The preset threshold may be adjusted according to different design requirements. The preset threshold may depend on the material of one or more of the positive electrode sheet, the negative electrode sheet, the electrolyte solution, and the separator in the battery cell. The pressure relief mechanism can adopt elements or components that are sensitive to pressure or temperature, that is, when the internal pressure or temperature of a battery cell reaches a preset threshold, the pressure relief mechanism is actuated, thus forming a channel for relieving internal pressure or temperature.

The "actuate" mentioned in the present application means that the pressure relief mechanism produces actions, so that the internal pressure and temperature of the battery cell can be relieved. Actions produced by the pressure relief mechanism may comprise, but are not limited to, at least a part of the pressure relief mechanism being broken, torn or fused, and the like. After the pressure relief mechanism is actuated, high temperature and high pressure substances inside the battery cell may be discharged outward from the pressure relief mechanism as emissions. In this way, the pressure of the battery cell can be relieved under controllable pressure or temperature, so as to prevent potential more serious accidents.

The emissions from the battery cell mentioned in the present application comprise, but are not limited to, the electrolyte solution, dissolved or split positive and negative electrode sheets, fragments of the separator, high temperature and high pressure gases generated by reaction, flames, and the like.

The pressure relief mechanism on the battery cell has an important impact on the safety of the battery. For example, when a battery is short-circuited or overcharged, it may cause thermal runaway inside the battery cell, resulting in a sudden rise in pressure or temperature. In this case, the internal pressure and temperature of the battery cell can be relieved outward through the actuation of the pressure relief mechanism to prevent explosion and fire of the battery cell.

In the current design scheme of the pressure relief mechanism, the main focus is to release the high pressure and high heat inside the battery cell, that is, to discharge the emissions to the outside of the battery cell. However, emissions from the inside of a thermal runaway battery cell have the potential to cause short-circuiting of the remaining battery cells, and further, the emissions to the outside of the battery may still have high temperatures, which may further lead to secondary disasters such as fires and explosions.

In view of this, an embodiment of the present application provides a technical solution where an electrical cavity configured to accommodate battery cells is separated from a collection cavity configured to collect emissions by means of a separation component, and when a pressure relief mechanism is actuated, the emissions of the battery cells enter the collection cavity, and no or minimal emissions enter the electrical cavity, so that the electrically connected components in the electrical cavity will not be turned on and short-circuited, thereby enhancing the safety of the battery. Also, in the present application, the collection cavity is further partitioned into two cavities by a partition structure, and a flow channel for guiding the emissions is formed in the second cavity by using a flow channel baffle, so as to extend the discharge path of the emissions, which can further cool the emissions, reduce the possibility of combustion of the emissions, reduce the impact of the emissions on the external environment, and enhance the safety of the battery.

The separation component in the present application may be configured to separate the electrical cavity and the collection cavity, so that the electrical cavity and the collection cavity are provided on either side of the separation component. Optionally, the separation component in the embodiment of the present application can also serve as a heat management component, that is, the separation component can accommodate a fluid to adjust the temperature of a plurality of battery cells. The fluid herein may be liquid or gas, and the temperature regulation refers to heating or cooling a plurality of battery cells. In the case of cooling or lowering the temperature of the battery cells, the separation component is configured to accommodate the cooling fluid to reduce the temperature of the plurality of battery cells; in addition, the separation component may also be configured for heating to heat up a plurality of battery cells, which is not limited in the embodiments of the present application. Optionally, the fluid may flow in a circulating manner to achieve a better temperature regulation effect. Optionally, the fluid may be water, a mixture of water and ethylene glycol, or air, etc.

The electrical cavity referred to in the present application is used to accommodate a plurality of battery cells and bus components. The electrical cavity may be sealed or unsealed. The electrical cavity provides installation space for battery cells and bus components. In some embodiments, a structure for fixing the battery cells may also be provided in the electrical cavity. The shape of the electrical cavity can be determined according to the number and shape of the battery cells and bus components to be accommodated. In some embodiments, the secondary battery may be cuboid, with six walls. The bus component mentioned in the present application is configured to realize electrical connection between a plurality of battery cells, such as parallel connection, series connection or series-parallel connection. The bus component may realize electrical connection between the battery cells by connecting electrode terminals of the battery cells. In some embodiments, the bus components may be fixed to the electrode terminals of the battery cells by welding.

The collection cavity mentioned in the present application is used to collect the emissions and can be sealed or unsealed. In some embodiments, the collection cavity may contain air, or other gases. Optionally, the collection cavity may also contain liquid, such as a cooling medium, or be provided with a component for accommodating the liquid, to further cool the emissions that enter the collection cavity. Further optionally, the gas or liquid in the collection cavity is circulated.

The technical solutions described in the embodiments of the present application are all applicable to various devices using batteries, such as mobile phones, portable apparatuses, laptops, battery vehicles, electric toys, electric tools, electric vehicles, ships, and spacecraft. For example, the spacecraft include airplanes, rockets, space shuttles, and spaceships.

It should be understood that the technical solutions described in the embodiments of the present application are not only applicable to the devices described above, but also applicable to all devices using batteries. However, for the sake of brevity, the following embodiments are described by taking an electric vehicle as an example.

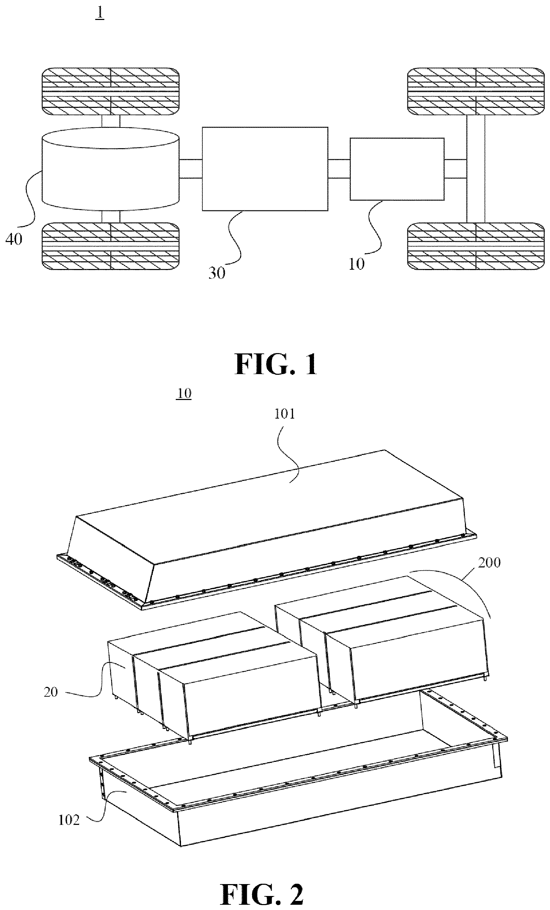

For example, as shown in Fig. 1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid electric vehicle, an extended range electric vehicle, or the like. The interior of the vehicle 1 may be provided with a motor 40, a controller 30, and a battery 10, and the controller 30 is configured to control the battery 10 to supply power to the motor 40. For example, the battery 10 may be arranged at the bottom or the head or the tail of the vehicle 1. The battery 10 may be configured to supply power to the vehicle 1. For example, the battery 10 may be used as an operating power source of the vehicle 1 for use in the circuit system of the vehicle 1, for example, to meet the operation power requirements of the vehicle 1 during starting, navigation and running. In another embodiment of the present application, the battery 10 can be used not only as the operating power source of the vehicle 1, but also as a driving power source of the vehicle 1 to provide driving power for the vehicle 1 instead of or partially instead of fuel or natural gas.

In order to meet different power requirements, the battery of the present application may comprise a plurality of battery cells, wherein the plurality of battery cells may be in series connection, in parallel connection, or in parallel-series connection, and the parallel-series connection refers to mixing of the series connection and the parallel connection. The battery may also be called a battery pack. Optionally, the plurality of battery cells may be in series, parallel or parallel-series connection to form battery modules first, and then a plurality of battery modules may be in series, parallel or parallel-series connection to form the battery. That is to say, the plurality of battery cells may directly form a battery, or may form battery modules first, and then the battery modules form a battery.

For example, as shown in Fig. 2, a schematic structural diagram of a battery 10 according to an embodiment of the present application is shown, wherein the battery 10 may comprise a plurality of battery cells 20. The battery 10 may further comprise a housing, the interior of the housing is a hollow structure, and a plurality of battery cells 20 are accommodated in the housing. As shown in Fig. 2, the housing may comprise two parts, which are referred to here as a first part 101 and a second part 102, respectively, and the first part 101 and the second part 102 are snap-fitted together. The shapes of the first part 101 and the second part 102 may be determined according to the combined shape of the battery cells 20, and the first part 101 and the second part 102 can each have an opening. For example, the first part 101 and the second part 102 may each be a hollow cuboid with only one surface being an open surface, the opening of the first part 101 and the opening of the second part 102 are arranged opposite to each other, and the first part 101 and the second part 102 are snap-fitted together to form a housing with a closed cavity. After the plurality of battery cells 20 are connected in parallel or in series or in parallel-series, they are placed in the housing formed after the first part 101 and the second part 102 are snap-fitted together.

Optionally, the battery 10 may also comprise other structures, which will not be repeated here. For example, the battery 10 may further comprise a bus component configured to realize electrical connection between the plurality of battery cells 20, for example, in parallel, in series or in parallel-series. Specifically, the bus component may realize electrical connection between the battery cells 20 by connecting electrode terminals of the battery cells 20. Furthermore, the bus component may be fixed to the electrode terminals of the battery cells 20 by welding. Electric energy of the plurality of battery cells 20 may be further led out through an electrically conductive mechanism penetrating the housing.

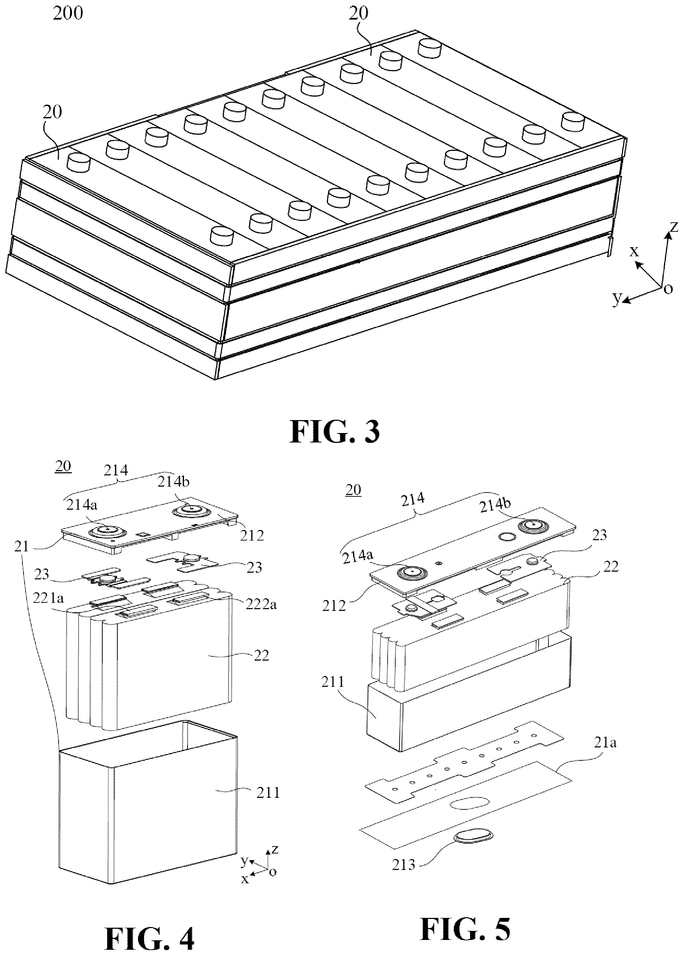

According to different power requirements, the number of battery cells can be set to any value. A plurality of battery cells may be in series, parallel or series-parallel connection to achieve a larger capacity or power. Since the number of battery cells comprised in each battery 10 may be large, in order to facilitate mounting, the battery cells may be arranged in groups, and each group of battery cells constitute a battery cell group 200. The number of battery cells comprised in the battery cell group 200 is not limited, and can be set according to requirements. For example, Fig. 3 is an embodiment of a battery cell group. A battery may comprise a plurality of battery cell groups, which may be connected in series, in parallel, or in parallel-series.

As shown in Fig. 4, which is a schematic structural diagram of a battery cell 20 according to an embodiment of the present application, the battery cell 20 comprises one or more electrode assemblies 22, a case 211 and a cover plate 212. The case 211 and the cover plate 212 form a shell 21. The walls of the case 211 and the cover plate 212 are all referred to as the walls of the battery cell 20. The case 211 is determined according to the combined shape of one or more electrode assemblies 22. For example, the case 211 can be a hollow cuboid, a cube or a cylinder, and one surface of the case 211 has an opening, so that one or more electrode assemblies 22 can be placed in the case 211. For example, when the case 211 is a hollow cuboid or cube, one of the planes of the case 211 is an open surface, that is, this plane does not have a wall, so that the inner of the case 211 is communicated with the outside. When the case 211 is a hollow cylinder, the end face of the case 211 is an open surface, that is, the end face does not have a wall, so that the inner of the case 211 is communicated with the outside. The cover plate 212 covers the opening and is connected with the case 211 to form a closed cavity in which the electrode assembly 22 is placed. The case 211 is filled with an electrolyte, such as an electrolyte solution.

The battery cell 20 may further comprise two electrode terminals 214, and the two electrode terminals 214 may be provided on the cover plate 212. The cover plate 212 is generally in the shape of a flat plate, and two electrode terminals 214 are fixed on the flat surface of the cover plate 212, and the two electrode terminals 214 are a positive electrode terminal 214a and a negative electrode terminal 214b, respectively. Each electrode terminal 214 is correspondingly provided with a connection member 23, which is located between the cover plate 212 and the electrode assembly 22 and is used to electrically connect the electrode assembly 22 and the electrode terminal 214.

As shown in Fig. 4, each electrode assembly 22 has a first tab 221a and a second tab 222a. The polarities of the first tab 221a and the second tab 222a are opposite. For example, when the first tab 221a is a positive tab, the second tab 222a is a negative tab. The first tabs 221a of one or more electrode assemblies 22 are connected to an electrode terminal through an connection member 23, and the second tabs 222a of one or more electrode assemblies 22 are connected to another electrode terminal through another connection member 23. For example, the positive electrode terminal 214a is connected to the positive tab through a connection member 23, and the negative electrode terminal 214b is connected to the negative tab through another connection member 23.

In the battery cell 20, according to actual use requirements, one or more electrode assembly 22 may be provided. As shown in Fig. 4, 4 independent electrode assemblies 22 are provided in the battery cell 20.

Fig. 5 is a schematic structural diagram of a battery cell 20 with a pressure relief mechanism 213 according to another embodiment of the present application.

The case 211, the cover plate 212, the electrode assembly 22 and the connection member 23 in Fig. 5 are the same as the case 211, the cover plate 212, the electrode assembly 22 and the connection member 23 in Fig. 4, and will not be repeated here for clarity.

In Fig. 5, the pressure relief mechanism 213 is provided on the bottom wall of the battery cell 20, that is, the wall 21a in Fig. 5, wherein the pressure relief mechanism 213 may be a part of the wall 21a or a separate structure from the wall 21a, which is fixed to the wall 21a by, for example, welding. When the pressure relief mechanism 213 is a part of the wall 21a, for example, the pressure relief mechanism 213 can be formed by arranging a notch on the wall 21a, and the thickness of the wall 21a corresponding to the notch is smaller than that of other parts of the pressure relief mechanism 213 other than the notch. The position with the notch is the weakest position of the pressure relief mechanism 213. When the gas generated by the battery cells 20 is too much such that the internal pressure of the case 211 rises and reaches the threshold, or the internal reaction of the battery cells 20 generates heat and causes the internal temperature of the battery cells 20 to rise and reach the threshold, the pressure relief mechanism 213 can be ruptured at the notch, making the inside of the case 211 communicated with the outside, and the gas pressure and temperature are released outward through the rupture of the pressure relief mechanism 213, thereby preventing the battery cell 20 from exploding.

In Fig. 5, the pressure relief mechanism 213 is described as being located on the bottom wall of the battery cell 20 as an example, but it should be understood that the pressure relief mechanism 213 in the embodiment of the present application may be located on the side wall of the case 211, or on the cover plate 212, or at the intersection of two walls of the case 211, which is not limited in the embodiment of the present application.

The pressure relief mechanism 213 may be various possible pressure relief structures, which is not limited in the embodiment of the present application. For example, the pressure relief mechanism 213 may be a temperature-sensitive pressure relief mechanism configured to be able to melt when the internal temperature of the battery cell 20 provided with the pressure relief mechanism 213 reaches a threshold; and/or the pressure relief mechanism 213 may be a pressure-sensitive pressure relief mechanism configured to be able to rupture when the internal pressure of the battery cell 20 provided with the pressure relief mechanism 213 reaches a threshold.

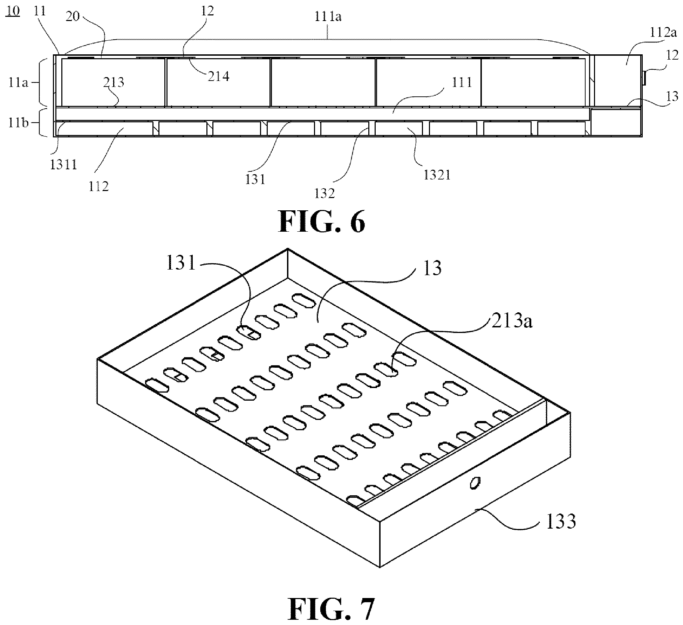

Fig. 6 illustrates a schematic structural diagram of a battery 10 according to an embodiment of the present application. As shown in Fig. 6, the battery 10 may comprise a plurality of battery cells 20 and a housing 11.

The housing 11 may comprise an electrical cavity 11a, a collection cavity 11b, a separation component 13, a partition structure 131 and a flow channel baffle 132.

Among them, the electrical cavity 11a is configured to accommodate a plurality of battery cells 20, at least one battery cell 20 of the plurality of battery cells 20 comprises a pressure relief mechanism 213, the pressure relief mechanism 213 is configured to be actuated when the internal pressure or temperature of the battery cell 20 provided with the pressure relief mechanism 213 reaches a threshold so as to relieve the internal pressure; the collection cavity 11b is configured to collect emissions from the battery cell 20 provided with the pressure relief mechanism 213 when the pressure relief mechanism 213 is actuated; the separation component 13 is configured to separate the electrical cavity 11a and the collection cavity 11b, so that the electrical cavity 11a and the collection cavity 11b are provided on either side of the separation component 13; the partition structure 131 is configured to partition the collection cavity 11b into a first cavity 111 and a second cavity 112, wherein the partition structure 131 is provided with a first exhaust vent 1311, and the first exhaust vent 1311 is configured to guide the emissions in the first cavity 111 into the second cavity 112; the flow channel baffle 132 is provided in the second cavity 112 and configured to form a flow channel 1321 for guiding the emissions.

In the embodiment of the present application, on one hand, the electrical cavity 11a for accommodating the battery cells 20 is separated from the collection cavity 11b for collecting emissions by means of the separation component 13, and when the pressure relief mechanism 213 is actuated, the emissions of the battery cells 20 enter the collection cavity 11b, and no or minimal emissions enter the electrical cavity 11a, so that the electrically connected components in the electrical cavity 11a will not be turned on and short-circuited, thereby enhancing the safety of the battery 10. On the other hand, the collection cavity 11b is partitioned into the first cavity 111 and the second cavity 112 by the partition structure 131, and the flow channel 1321 for guiding the emissions is formed in the second cavity 112 by the flow channel baffle 132, so that the emissions discharged after runaway of the battery cells 20 can enter the first cavity 111, and enter the second cavity 112 through the first exhaust vent 1311 on the partition structure 131, and then pass through the flow channel 1321 in the second cavity 112. In this way, the discharge path of the emissions can be greatly extended, so that the emissions can undergo sufficient flow buffering, which further lowers the temperature of the emissions, reduces the possibility of combustion of the emissions, reduces the impact of the emissions on the external environment, and ensures the safety of the battery.

Optionally, the partition structure 131 in the embodiment of the present application may be provided parallel to the separation component 13, and it can partition the collection cavity 11b into an upper cavity and a lower cavity in the vertical direction. Optionally, the partition structure 131 in the embodiment of the present application may also be arranged in other forms, for example, arranged perpendicular to the separation component 13, which is not limited in the present application.

Optionally, the electrical cavity 11a in the embodiment of the present application may also be configured to accommodate a bus component, and the bus component is configured to realize the electrical connection of the plurality of battery cells 20. The bus component may realize electrical connection among the battery cells 20 by connecting electrode terminals 214 of the battery cells 20.

For the convenience of description, the battery cell 20 involved in the related description of the pressure relief mechanism 213 below refers to the battery cell 20 provided with the pressure relief mechanism 213. For example, the battery cell 20 may be the battery cell 20 in Fig. 4 or 5.

As an implementation manner, the housing 11 in the embodiment of the present application may further comprise a pressure balancing mechanism 12; the pressure balancing mechanism 12 is used to balance the pressure inside and outside the housing 11, the pressure balancing mechanism 12 is configured to guide the emissions to the pressure balancing mechanism 12 through the flow channel 1321 to discharge the emissions to the outside of the housing 11.

After runaway of the battery cell 20, the emissions may enter the first cavity 111 in the collection cavity 11b through the pressure relief mechanism 213, enter the second cavity 112 through the first exhaust vent 1311 provided on the partition structure 131, pass through the flow channel 1321 in the second cavity 112, and then be discharged through the pressure balancing mechanism 12. Since the discharge path of the emissions is greatly extended during this process, the emissions can undergo sufficient flow buffering, which further cools the emissions. Therefore, in the embodiment of the present application, the temperature and the possibility of combustion of the emissions discharged from the housing 11 are relatively low, so that the impact of the emissions on the external environment of the battery can be reduced, and the safety performance of the battery can be enhanced.

As an implementation manner, the electrical cavity 11a in the embodiment of the present application comprises a first sub-cavity 111a and a second sub-cavity 112a, the first sub-cavity 111a is configured to accommodate the plurality of battery cells 20, the second sub-cavity 112a is arranged adjacent to the first sub-cavity 111a; the pressure balancing mechanism 12 is provided on the outer wall of the second sub-cavity 112a, and the second sub-cavity 112a is configured to be communicated with the second cavity 112 to allow the emissions to be guided into the second sub-cavity 112 through the flow channel 1321 and discharged to the outside of the housing 11 through the pressure balancing mechanism 12.

In the embodiment of the present application, the emissions generated by the battery cells 20 in the first sub-cavity 111a can enter the second sub-cavity 112a through the second cavity 112 and be discharged through the pressure balancing mechanism 12 on the second sub-cavity 112a. On one hand, the emissions of the battery cell 20 are separated from the first sub-cavity 111a used for accommodating the battery cells 20, which can avoid the impact of the emissions on the electrically connected components in the first sub-cavity 111a, and enhance the safety of the battery 10. On the other hand, by arranging the second cavity 112 and the second sub-cavity 112a, the discharge path of the emissions can be greatly extended, so that the emissions can be further cooled, the possibility of combustion of the emissions is reduced, and the safety of the battery and the external environment is enhanced.

It should be understood that the above-mentioned first sub-cavity 111a and second sub-cavity 112a are only an implementation manner of the electrical cavity 11a. Optionally, the electrical cavity 11a in the embodiment of the present application may also be a separate cavity that does not comprise other sub-cavities. In this case, the pressure balancing mechanism 12 may be provided on one of the walls of the collection cavity 11b; or, the electrical cavity 11a may also comprise a plurality of sub-cavities, and the pressure balancing mechanism 12 may be provided on the outer wall of one of the plurality of sub-cavities. In the embodiment of the present application, as long as the emissions of the battery cells 20 can be discharged to the outside of the housing 11, the specific arrangement of the cavity is not limited in the embodiment of the present application.

Optionally, in an embodiment of the present application, the separation component 13 has a wall shared by the electrical cavity 11a and the collection cavity 11b. As shown in Fig. 6, the separation component 13 may be a wall of the electrical cavity 11a and a wall of the collection cavity 11b simultaneously. That is to say, the separation component 13 (or a part thereof) can directly serve as the wall shared by the electrical cavity 11a and the collection cavity 11b, so that the emissions of the battery cells 20 can enter the collection cavity 11b through the separation component 13. Also, due to the existence of the separation component 13, the emissions can be separated from the electrical cavity 11a as much as possible, thereby reducing the danger of the emissions and enhancing the safety of the battery 10.

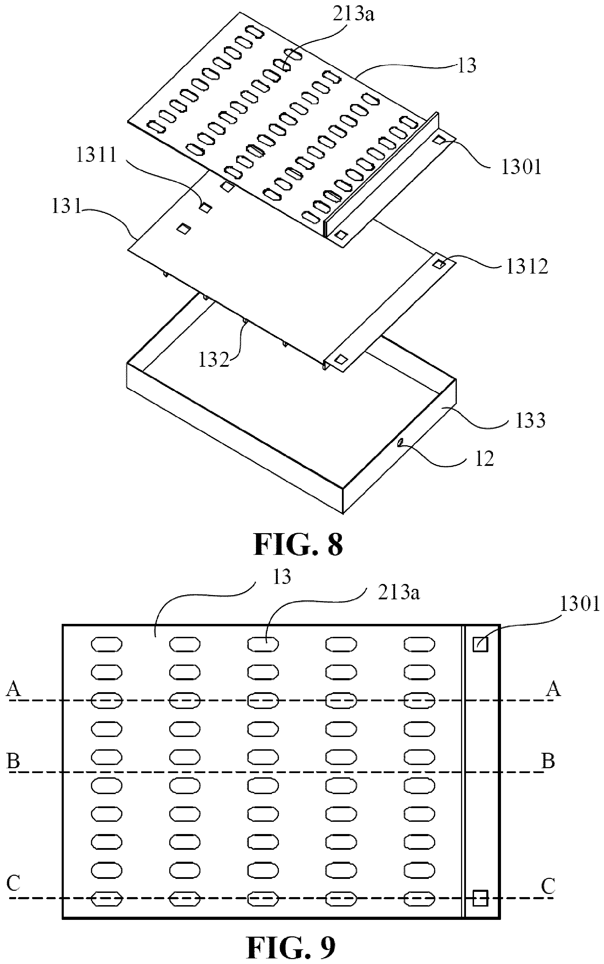

For ease of understanding, Fig. 7 is a schematic diagram of a housing 11 according to an embodiment of the present application, and Fig. 8 is an exploded schematic diagram corresponding to the housing 11 in Fig. 7. As shown in Figs. 7 and 8, the housing 11 comprises a separation component 13 and a partition structure 131. The separation component 13 is provided with a pressure relief area 213a corresponding to the pressure relief mechanism 213 of the battery cell 20, and the partition structure 131 is provided with a first exhaust vent 1311 and a flow channel baffle 132. Further, the housing 11 in the embodiment of the present application may further comprise a guard member 133, and the guard member 133 is configured to protect the separation component 13. The guard member 133 and the separation component 13 form the collection cavity 11b.

Optionally, the above-mentioned flow channel baffle 132 may also be provided on the guard member 133, which is not limited in the embodiment of the present application.

Further, the separation component 13 in the embodiment of the present application may be provided with a second exhaust vent 1301, the partition structure 131 is further provided with a third exhaust vent 1312 corresponding to the second exhaust vent 1301, and the second sub-cavity 112a is communicated with the second cavity 112 via the second exhaust vent 1301 and the third exhaust vent 1312. It should be understood that the second exhaust vent 1301 and the third exhaust vent 1312 can be arranged in a manner and shape conforming to actual needs, which is not limited in the embodiment of the present application.

It should be understood that, in order to allow the emissions to be discharged from the second cavity 112 to the outside of the housing 11 through the pressure balancing mechanism 12, the emissions can be discharged according to the route described in the above embodiment, that is, enter the first cavity 111 through the pressure relief area 213a, then enter the second cavity 112 through the first exhaust vent 1311 on the partition structure 131, and then pass through the flow channel 1321 in the second cavity 112, and then pass through the third exhaust vent 1312 and the second exhaust vent 1301 to enter the second sub-cavity 112a, and then be discharged to the outside of the housing 11 through the pressure balancing mechanism 12 provided on the outer wall of the second sub-cavity 112a.

Or optionally, the emissions passing through the flow channel 1321 in the embodiment of the present application can also be discharged through the pressure balancing mechanism 12 in other ways. For example, when the position where the separation component 13 is provided with the second exhaust vent 1301 is not shielded by the partition structure 131, that is, when the partition structure 131 is only provided on the part of the separation component 13 where the pressure relief area 213a is provided, the emissions passing through the flow channel 1321 may directly enter the second sub-cavity 112a through the second exhaust vent 1301, and be discharged to the outside of the housing 11 through the pressure balancing mechanism 12, or optionally, the discharge path may be arranged according to the actual situation, so that the emissions can be discharged outside through the pressure balancing mechanism 12, which is not limited in the embodiment of the present application.

Optionally, the housing 11 in the embodiment of the present application may further comprise an upper housing (not shown), such as an upper housing cover, so as to enclose with the separation component 13 to form the electrical cavity 11a.

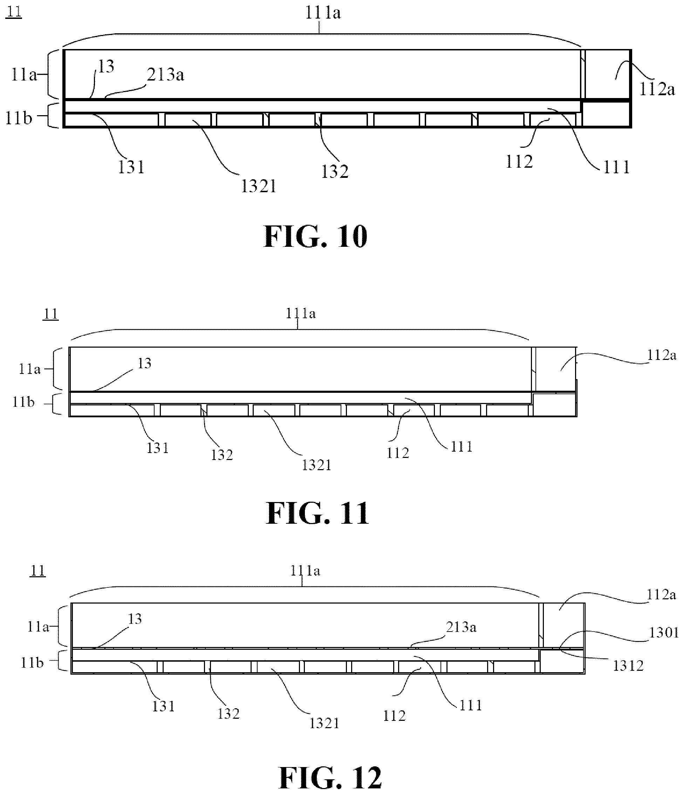

Fig. 9 shows a schematic plan view of the housing 11 in Fig. 7 and Fig. 8 according to the embodiment of the present application, and Figs. 10 to 12 show schematic cross-sectional views of the housing 11 in Fig. 9 along three axes A-A, B-B, and C-C, respectively. As shown in Figs. 10 to 12, the housing 11 may comprise an electrical cavity 11a, and a collection cavity 11b. Among them, the collection cavity 11b can be partitioned into a first cavity 111 and a second cavity 112 by a partition structure 131, and a flow channel baffle 132 provided on the partition structure 131 can be configured to form a flow channel 1321 in the second cavity 112 to guide emissions.

After runaway of the battery cell 20, its emissions can be discharged into the collection cavity 11b through the pressure relief mechanism 213. More specifically, the emissions can enter the first cavity 111 through the pressure relief mechanism 213, be guided into the second cavity 112 by the first exhaust vent 1311 provided on the partition structure 131, and enter the flow channel 1321.

The emissions of the battery cell 20 in the embodiment of the present application, after passing through the pressure relief area 213a, enter the first cavity 111 first, and then pass through the flow channel 1321 in the second cavity 112. Therefore, the discharge path of the emissions discharged from the pressure relief area 213a located anywhere can be greatly extended, so that the emissions can undergo sufficient flow buffering to fully lower the temperature of the emissions, thereby reducing the possibility of combustion of the emissions, and enhancing the safety performance of the battery.

Further, the emissions in the flow channel 1321 can enter the second sub-cavity 112a through the third exhaust vent 1312 provided on the partition structure 131 and the second exhaust vent 1301 provided on the separation component 13 in sequence, and be discharged to the outside of the battery housing 11 through the pressure balancing mechanism 12 provided on the outer wall of the second sub-cavity 112a.

The emissions of the battery cell 20 in the present application has undergone sufficient flow buffering through the long-path flow channel 1321 before being discharged to the outside of the battery housing 11, the temperature of the emissions can be greatly reduced. Therefore, the housing 11 in the embodiment of the present application can lower the temperature of the emissions, reduce the possibility of combustion of the emissions, thereby reducing the impact of the emissions on the external environment, and enhancing the safety performance of the battery.

As an implementation manner, the first exhaust vent 1311 in the embodiment of the present application may be provided at an end of the partition structure 131 away from the pressure balancing mechanism 12, or the first exhaust vent 1311 may be provided in the middle of the partition structure 131.

The first exhaust vent 1311 can be arranged at different positions of the partition structure 131 to match the structural strength of the battery 10, so that the structural design of the battery housing 11 is more flexible.

Further, the flow channel 1321 in the embodiment of the present application may be an S-shaped flow channel, and an inlet of the flow channel 1321 is communicated with the first exhaust vent 1311.

The circuitous S-shaped flow channel is provided to maximize the length of the flow channel, so that the discharge path of the emissions can be extended to enable sufficient flow buffering of the emissions, thereby lowering the temperature of the emissions and reducing the possibility of combustion of the emissions. Also, the inlet of the S-shaped flow channel can be communicated with the first exhaust vent 1311, so that the discharge path of the emissions from the first cavity 111 into the second cavity 112 can be greatly extended. As a result, the temperature of the emissions can be lowered as much as possible, and the possibility of combustion of the emissions can be reduced.

For ease of understanding, an embodiment of the arrangement position of the first exhaust vent 1311 and the arrangement manner of the corresponding flow channel 1321 described above is shown below.

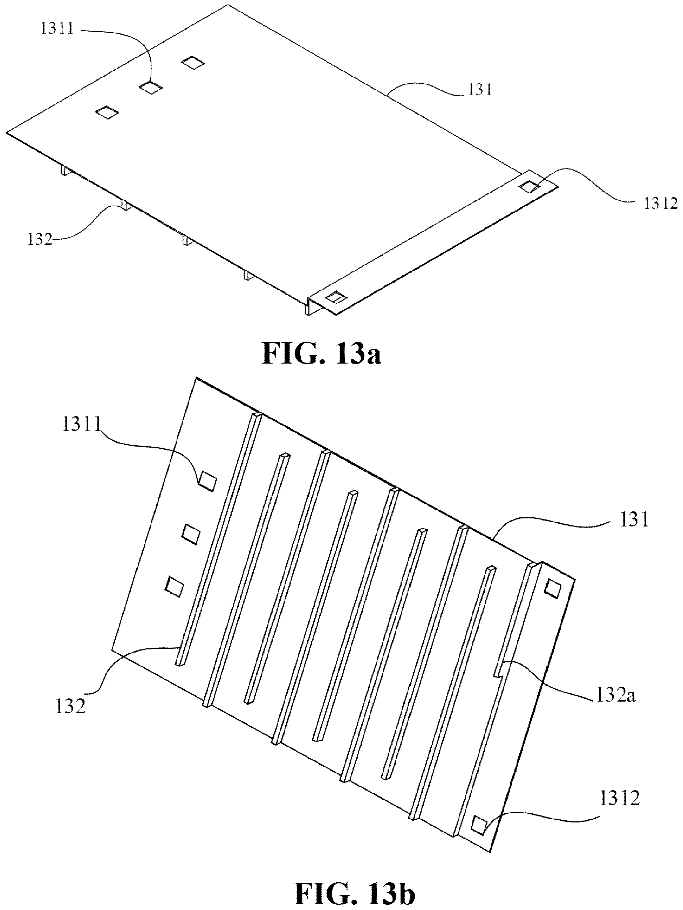

As an implementation manner, Fig. 13a shows a schematic diagram of an arrangement manner of a first exhaust vent 1311 in an embodiment of the present application. As shown in Fig. 13a, the first exhaust vent 1311 is arranged at an end of the partition structure 131, and further, it can be arranged at an end of the partition structure 131 away from the pressure balancing mechanism 12, so that the discharge path of the emissions from any pressure relief mechanism 213 can be extended to a great extent. In Fig. 13a, the first exhaust vent 1311 is exemplified as three square through holes, but in actual situations, the shape and number of the exhaust vents can be designed according to actual requirements, which is not limited in the present application.

Correspondingly, the flow channel baffle 132 provided on the partition structure 131 may correspond to the first exhaust vent 1311 provided at the end of the partition structure 131. Figs. b and 13c are the bottom and top views of the arrangement manner of the flow channel baffle corresponding to the first exhaust vent 131 arranged at the end of the partition structure 131. As shown in Figs. 13a to 13c, the inlet of the flow channel 1321 formed by the flow channel baffle 132 provided on the partition structure 131 can be communicated with the first exhaust hole 1311 at the end, and the flow channel formed by the flow channel baffle 132 is in a circuitous S-shape, forming a single channel for the emissions to flow through, so that the emissions entering the second cavity 112 through the first exhaust vent 1311 can only flow along the designed S-shaped flow channel, making full use of the entire space of the second cavity 112, and greatly extending the discharge path of the emissions entering the flow channel 1321, thereby fully lowering the temperature of the emissions and the possibility of combustion of the emissions, and enhancing the safety performance of the battery.

It should be understood that the emissions passing through the flow channel 1321 may be discharged to other cavities, such as the second sub-cavity 112a in the foregoing embodiment, through, for example, the third exhaust vent 1312 and the second exhaust vent 1301, and be discharged outside through the pressure balancing mechanism 12 on the housing 11. The specific process can refer to the above embodiments, and will not be repeated here.

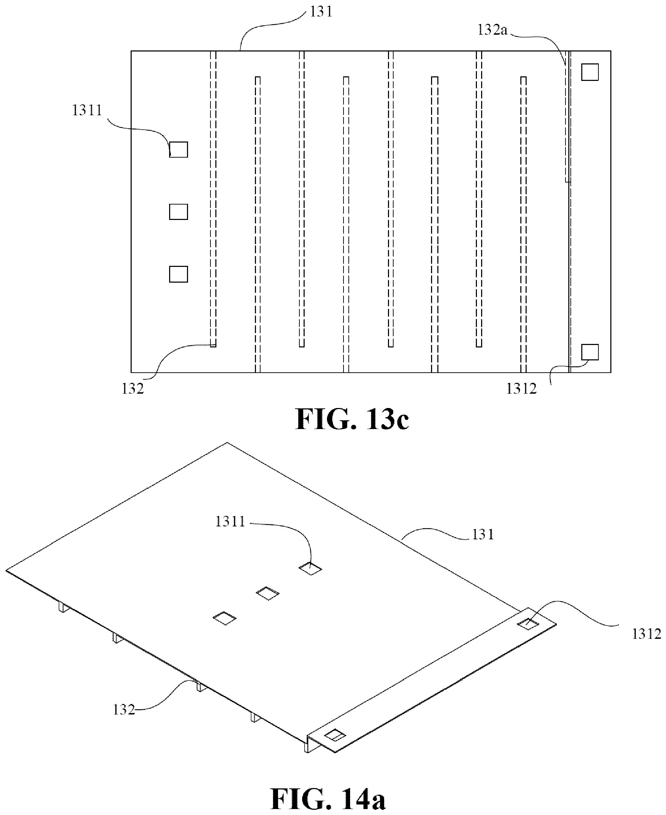

Optionally, after passing through the flow channel 1321, the emissions in the embodiment of the present application can be discharged to the outside of the housing 11 through the pressure balancing mechanism 12. In this case, the flow channel baffle 132 provided near the pressure balancing mechanism 12 can provide a reserved discharge space for the emissions, so that the emissions can enter other cavities after passing through the flow channel, and be discharged to the outside of the housing 11. Specifically, for example, a certain gap can be reserved by the flow channel baffle 132a shown in Figs. 13b and 13c to provide a path for the emissions to exit the flow channel.

As another implementation manner, Fig. 14a shows a schematic diagram of another arrangement manner of a first exhaust vent 1311 in an embodiment of the present application. As shown in Fig. 14a, the first exhaust vent 1311 may be provided in the middle of the partition structure 131.

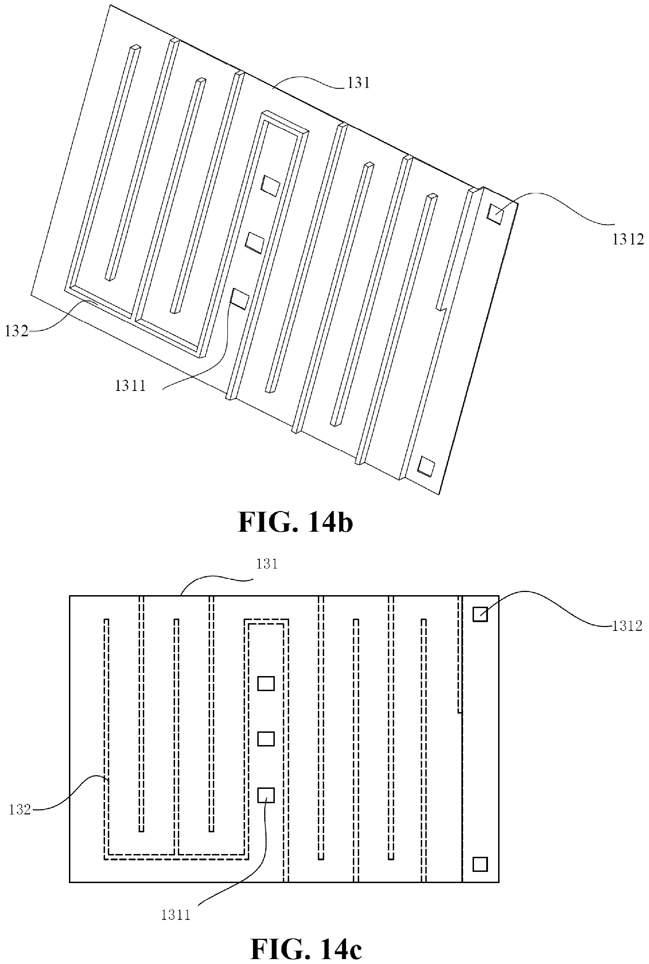

Correspondingly, the flow channel baffle 132 provided on the partition structure 131 may correspond to the first exhaust vent 1311 provided at the end of the partition structure 131. Figs. 14b and 14c are the bottom and top views of arrangement of the first exhaust vent 1311 in the middle of the flow channel baffle 131. As shown in Figs. 14a to 14c, the inlet of the flow channel 1321 formed by the flow channel baffles 132 provided on the partition structure 131 may be communicated with the first exhaust vent 1311, and the flow channel formed by the plurality of flow channel baffles is in a circuitous S-shape, forming a single channel for the emissions to flow through, so that the discharge path of the emissions entering the flow channel can be greatly extended, thereby fully lowering the temperature of the emissions, reducing the possibility of combustion of the emissions, and enhancing the safety performance of the battery.

In the embodiment of the present application, by setting the location of the first exhaust vent 1311 corresponding to the arrangement manner of the S-shaped flow channel 1321, the discharge path of the emissions entering the collection cavity 11b can be extended to the greatest extent, so that the emissions can undergo sufficient flow buffering to fully lower the temperature of the emissions, reduce the possibility of combustion of the emissions, and reduce the impact of the emissions on the external environment, thereby enhancing the safety performance of the battery.

The emissions generated by the thermal runaway of the battery cells 20 may comprise combustible gases, such as H₂, and CO. In order to further reduce the possibility of combustion of the emissions, making the emissions not easily ignited, materials that react with the combustible gases in the emissions can be provided inside the housing 11.

Optionally, an oxidant or a cooling material may be provided in the collection cavity 11b in the embodiment of the present application. Optionally, in embodiments using an oxidant, a catalyst may be added to accelerate the reaction. Optional catalysts comprise, for example, porous silicon carbide ceramics supported precious metals.

More specifically, the oxidant or cooling material is provided on the surface of the partition structure 131; and/or, the oxidant or cooling material is provided on the surface of the flow channel baffle 132.

After the emissions discharged from the runaway battery cells 20 pass through the housing 11 in the embodiment of the present application, through the extended discharge path, the temperature of the emissions can be lowered and the possibility of combustion of the emissions can be reduced. Based on this, the embodiment of the present application can further have an oxidant or a cooling material provided in the collection cavity 11b, so that the combustible gas in the emissions can react or be treated, which can further lower the temperature of the emissions, and reduce the possibility of combustion of the emissions.

As an implementation manner, the oxidant or the cooling material in the embodiment of the present application is provided on a surface of the guard member 133 facing the separation component 13.

By arranging an oxidant or a cooling material on the surface of the guard member 133, the emissions can further react or be treated on the discharge path, thereby further lowering the temperature of the emissions and reducing their possibility of combustion, and hence ensuring the safety of the battery and the external environment.

As a possible implementation manner, the surface of the partition structure 131 facing the guard member 133 in the embodiment of the present application has a recessed portion, and the recessed portion is configured to accommodate an oxidant or a cooling material.

By this uneven design, the contact area between the cavity and the combustible gas emissions can be significantly increased, and also, more oxidants or cooling materials can be held, so that the emissions can react more effectively, which can lower the temperature and possibility of combustion of the emissions, reduce their impact on the battery and the external environment, and ensure the safety of the battery.

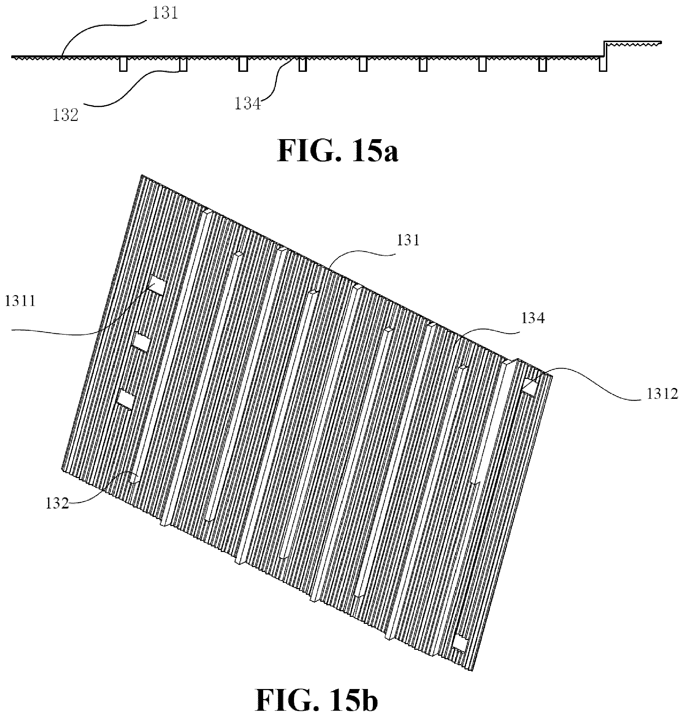

Specifically, Figs. 15a and 15b are schematic diagrams showing a partition structure 131 provided with a recessed portion 134 according to an embodiment of the present application. As shown in Figs. 15a and 15b, the surface of the partition structure 131 on which the flow channel baffle 132 is provided may have the recessed portion 134.

Optionally, the oxidant used in the embodiments of the present application may comprise at least one of the following: copper oxide powder, sodium peroxide, potassium permanganate; and/or, the cooling material may comprise a phase change material.

It should be understood that the above only exemplifies several common materials, and in practical applications, suitable oxidants and/or cooling materials can be selected according to actual situations, which is not limited in the present application.

Optionally, the oxidant and/or the cooling material in the embodiments of the present application may be fixed by means of adhesive bonding. Or optionally, they can also be fixed by coating, which is not limited in the present application.

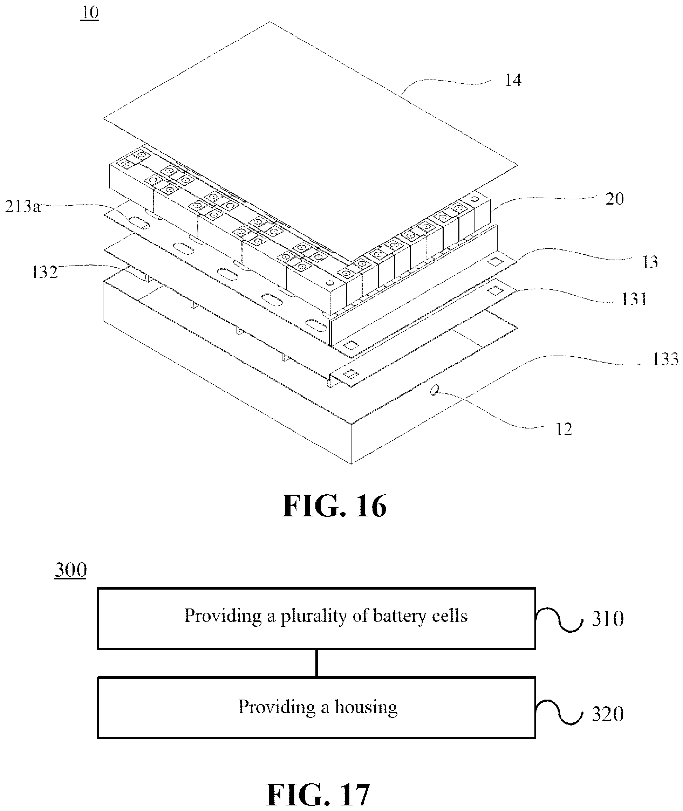

Fig. 16 shows an exploded view of a battery 10 according to an embodiment of the present application. The battery 10 may comprise a plurality of battery cells 20 and the housing 11 in the preceding embodiments.

For the description of the components in the battery 10, reference may be made to the preceding embodiments, which is not repeated here for brevity.

Optionally, the battery 10 may further comprise an upper cover 14 of the housing, and the upper cover 14 may form the electrical cavity 11a together with the separation component 13. It should be understood that the upper cover 14 in the embodiment of the present application is only used as an example to describe the battery 10, and the upper cover 14 in the battery 10 may also adopt other manners, as described in Fig. 2 for the first part 101, which is not limited in the embodiment of the present application.

An embodiment of the present application further provides an electrical apparatus, the electrical apparatus may comprise the battery 10 in any of the preceding embodiments, and the battery 10 is configured to provide electric energy.

Optionally, the electrical apparatus may be a vehicle 1, a ship or a spacecraft.

The battery housing, battery and electrical apparatus of the embodiments of the present application are described above, and a method and device for manufacturing the battery of the embodiments of the present application will be described below. For those not described in detail, reference may be made to the foregoing embodiments.

Fig. 17 is a schematic flowchart of a method 300 for manufacturing a battery according to an embodiment of the present application. As shown in Fig. 17, the method 300 may comprise:
S310, providing a plurality of battery cells 20.

As an implementation manner, at least one battery cell 20 of the plurality of battery cells 20 comprises a pressure relief mechanism 213, and the pressure relief mechanism 213 is configured to be actuated when the internal pressure or temperature of the battery cell 20 provided with the pressure relief mechanism 213 reaches a threshold so as to relieve the internal pressure.

S320, providing a housing 11.

As an implementation manner, the housing 11 comprises: an electrical cavity 11a, configured to accommodate the plurality of battery cells 20; a collection cavity 11b, configured to collect emissions from the battery cells 20 with the pressure relief mechanism 213 when the pressure relief mechanism 213 is actuated; a separation component 13, configured to separate the electrical cavity 11a and the collection cavity 11b, so that the electrical cavity 11a and the collection cavity 11b are provided on either side of the separation component 13; a partition structure 131, configured to partition the collection cavity 11b into a first cavity 111 and a second cavity 112, wherein a first exhaust vent 1311 is provided on the partition structure 131, and the first exhaust vent 1311 is configured to guide the emissions in the first cavity 111 into the second cavity 112; a flow channel baffle 132, arranged in the second cavity 112 and configured to form a flow channel 1321 for guiding the emissions.

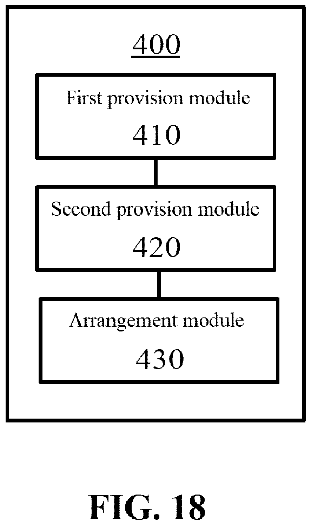

Fig. 18 is a schematic block diagram of a device 400 for manufacturing a battery according to an embodiment of the present application. As shown in Fig. 18, the device 400 for manufacturing a battery may comprise: a first provision module 410, a second provision module 420 and an arrangement module 430.

The first provision module 410 is configured to provide a plurality of battery cells 20, at least one battery cell 20 of the plurality of battery cells 20 comprises a pressure relief mechanism 213, and the pressure relief mechanism 213 is configured to be actuated when the internal pressure or temperature of the battery cell 20 provided with the pressure relief mechanism 213 reaches a threshold so as to relieve the internal pressure.

The second provision module 420 is configured to provide a housing 11. The housing 11 comprises: an electrical cavity 11a, configured to accommodate the plurality of battery cells 20; a collection cavity 11b, configured to collect emissions from the battery cells 20 with the pressure relief mechanism 213 when the pressure relief mechanism 213 is actuated; a separation component 13, configured to separate the electrical cavity 11a and the collection cavity 11b, so that the electrical cavity 11a and the collection cavity 11b are provided on either side of the separation component 13; a partition structure 131, configured to partition the collection cavity 11b into a first cavity 111 and a second cavity 112; a flow channel baffle 132, arranged in the second cavity 112 and configured to form a flow channel 1321 for guiding the emissions.

The arrangement module 430 is configured to arrange a first exhaust vent 1311 on the partition structure 131, and the first exhaust vent 1311 is configured to guide the emissions in the first cavity 111 into the second cavity 112.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather comprises all technical solutions falling within the scope of the claims.

## Claims

1. A battery housing, comprising:
an electrical cavity configured to accommodate a plurality of battery cells , wherein at least one battery cell of the plurality of battery cells comprises a pressure relief mechanism, and the pressure relief mechanism is configured to be actuated when the internal pressure or temperature of the battery cell provided with the pressure relief mechanism reaches a threshold so as to relieve the internal pressure;
a collection cavity configured to collect emissions from the battery cell provided with the pressure relief mechanism when the pressure relief mechanism is actuated;
a separation component configured to separate the electrical cavity and the collection cavity, so that the electrical cavity and the collection cavity are provided on either side of the separation component;
a partition structure configured to partition the collection cavity into a first cavity and a second cavity, wherein the partition structure is provided with a first exhaust vent, and the first exhaust vent is configured to guide the emissions in the first cavity into the second cavity;
a flow channel baffle arranged in the second cavity and configured to form a flow channel for guiding the emissions.

2. The housing according to claim 1, further comprising:
a pressure balancing mechanism configured to balance the pressure inside and outside the housing, the pressure balancing mechanism being configured to guide the emissions to the pressure balancing mechanism through the flow channel to discharge the emissions to the outside of the housing.

3. The housing according to claim 2, wherein the first exhaust vent is provided at an end of the partition structure away from the pressure balancing mechanism, or,
the first exhaust vent is provided in the middle of the partition structure.

4. The housing according to any one of claims 1 to 3, wherein the flow channel is an S-shaped flow channel, and an inlet of the flow channel is communicated with the first exhaust vent.

5. The housing according to any one of claims 1 to 4, wherein an oxidant or a cooling material is provided in the collection cavity.

6. The housing according to claim 5, wherein the oxidant or the cooling material is provided on the surface of the partition structure; and/or,
the oxidant or the cooling material is provided on the surface of the flow channel baffle.

7. The housing according to claim 5 or 6, further comprising:
a guard member configured to protect the separation component, wherein the guard member and the separation component form the collection cavity,
and wherein, the oxidant or the cooling material is provided on a surface of the guard member facing the separation component.

8. The housing according to claim 7, wherein a surface of the partition structure facing the guard member has a recessed portion, and the recessed portion is configured to accommodate the oxidant or the cooling material.

9. The housing according to any one of claims 2 to 8, wherein the electrical cavity comprises a first sub-cavity and a second sub-cavity, the first sub-cavity is configured to accommodate the plurality of battery cells, and the second sub-cavity is provided adjacent to the first sub-cavity;
the pressure balancing mechanism is provided on the outer wall of the second sub-cavity, and the second sub-cavity is configured to be communicated with the second cavity to guide the emissions to the second sub-cavity through the flow channel to discharge the emissions to the outside of the housing through the pressure balancing mechanism.

10. The housing according to claim 9, wherein the separation component is provided with a second exhaust vent, the partition structure is further provided with a third exhaust vent corresponding to the second exhaust vent, and the second sub-cavity is communicated with the second cavity via the second exhaust vent and the third exhaust vent.

11. A battery, comprising:
a plurality of battery cells, wherein at least one battery cell of the plurality of battery cells comprises a pressure relief mechanism, and the pressure relief mechanism is configured to be actuated when the internal pressure or temperature of the battery cell provided with the pressure relief mechanism reaches a threshold so as to relieve the internal pressure; and
the housing according to any one of claims 1 to 10, wherein the plurality of battery cells are accommodated in the housing.

12. An electrical apparatus, comprising the battery according to claim 11, wherein the battery is configured to provide electric energy.

13. A method for manufacturing a battery, comprising:
providing a plurality of battery cells, wherein at least one battery cell of the plurality of battery cells comprises a pressure relief mechanism, and the pressure relief mechanism is configured to be actuated when the internal pressure or temperature of the battery cell provided with the pressure relief mechanism reaches a threshold so as to relieve the internal pressure;
providing a housing, the housing comprising:
an electrical cavity configured to accommodate the plurality of battery cells;
a collection cavity configured to collect emissions from the battery cell provided with the pressure relief mechanism when the pressure relief mechanism is actuated;
a separation component configured to separate the electrical cavity and the collection cavity, so that the electrical cavity and the collection cavity are provided on either side of the separation component;
a partition structure configured to partition the collection cavity into a first cavity and a second cavity, wherein the partition structure is provided with a first exhaust vent, and the first exhaust vent is configured to guide the emissions in the first cavity into the second cavity; and
a flow channel baffle arranged in the lower cavity and configured to form a flow channel for guiding the emissions.

14. A device for manufacturing a battery, comprising:
a first provision module configured to provide a plurality of battery cells, wherein at least one battery cell of the plurality of battery cells comprises a pressure relief mechanism, and the pressure relief mechanism is configured to be actuated when the internal pressure or temperature of the battery cell provided with the pressure relief mechanism reaches a threshold so as to relieve the internal pressure;
a second provision module configured to provide a housing, the housing comprising:
an electrical cavity configured to accommodate the plurality of battery cells;
a collection cavity configured to collect emissions from the battery cell provided with the pressure relief mechanism when the pressure relief mechanism is actuated;
a separation component configured to separate the electrical cavity and the collection cavity, so that the electrical cavity and the collection cavity are provided on either side of the separation component;
a partition structure configured to partition the collection cavity into a first cavity and a second cavity; and
a flow channelbaffle arranged in the second cavity and configured to form a flow channel for guiding the emissions; and
an arrangement module configured to arrange a first exhaust vent on the partition structure, wherein the first exhaust vent is configured to guide the emissions in the first cavity into the second cavity.
